# EUROPÄISCHE PATENTSCHRIFT

(11) **EP 1 491 745 B1**
(45) Veröffentlichungstag und Bekanntmachung des Hinweises auf die Patenterteilung: **05.11.2008**
(21) Anmeldenummer: 04090217.3
(22) Anmeldetag: 04.06.2004
(51) Int. Cl.: F02C 9/26

(54) **Elektronisches Triebwerkregelungssystem**
Electronic aircraft engine control system
Système de contrôle électronique d'aéronef

(30) Priorität: 25.06.2003 DE 10329252
(43) Veröffentlichungstag der Anmeldung: 29.12.2004
(73) Patentinhaber: Rolls-Royce Deutschland Ltd & Co KG, 15827 Dahlewitz (DE)
(72) Erfinder: Bartel, Matthias, 15738 Zeuthen (DE)
(74) Vertreter: Wablat, Wolfgang

(56) Entgegenhaltungen:
- EP-A- 0 427 952
- EP-A1- 0 363 301
- US-A- 5 315 819

## Beschreibung

Die Erfindung betrifft ein elektronisches Triebwerksregelungssystem zur Einstellung einer maximal möglichen Leistung auf der Grundlage von in einem Datenkubus jeweils für verschiedene Triebwerksleistungsstufen gespeicherten Flugzustandsdaten und einer Mehrzahl leistungsbegrenzender thermodynamischer und mechanischer Triebwerksparameter.

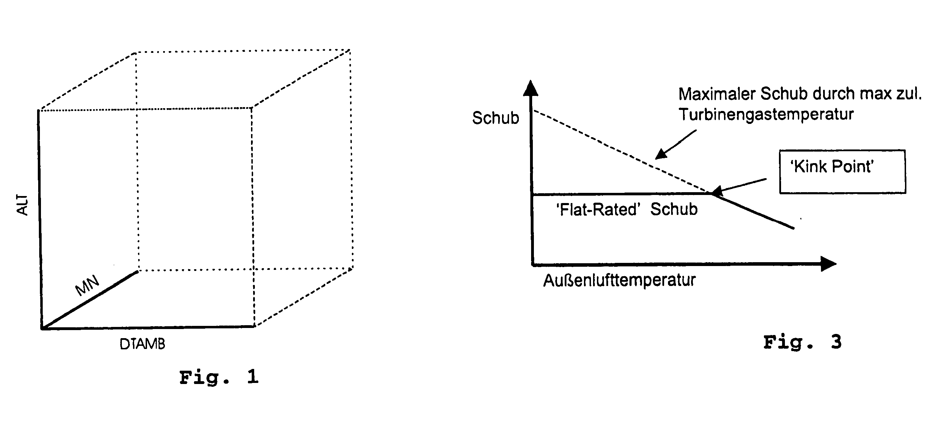

Die von einem Flugtriebwerk ohne Überschreitung seiner thermischen und mechanischen Belastbarkeit zur Verfügung gestellte maximale Leistung hängt maßgeblich vom Flugzustand ab, der erstens durch die Flughöhe, zweitens durch die Außentemperatur und drittens durch die Flugmachzahl hinreichend definiert ist. Als wichtiger leistungsbegrenzender thermodynamischer Triebwerksparameter gilt bei der Leistungsregelung von Flugtriebwerken die Turbinengastemperatur, die bekanntermaßen so eingesetzt wird, dass unter Zugrundelegung einer konstanten Flugmachzahl und eines konstanten Umgebungsdruckes ein der jeweiligen Außenlufttemperatur entsprechender, aber durch die kritische Turbinengastemperatur begrenzter maximaler Schub ermittelt wird. Da aber die Triebwerksleistung in einem niedrigen Außentemperaturbereich ausreichend hoch ist und der durch die Turbinengastemperatur begrenzte maximale Schub erst bei einer bestimmten Höhe der Außentemperatur erreicht wird und sich von diesem Knickpunkt (kink point) an stetig verringert, werden die dementsprechenden Daten für die Leistungsregelung verwendet. Das heißt, es werden für verschiedene Triebwerksleistungsstufen - Start, Steigen, Reiseflug oder Ausfall eines Triebwerks - die maximal zulässige Turbinengastemperatur als kritischer thermodynamischer Triebwerksparameter, der in einem niedrigen Außentemperaturbereich bis zu einer bestimmten Höhe der Außentemperatur gleichbleibende maximale Schub (Flat-Rated-Schub) und der "Kink Point" individuell festgelegt. Dieser Sachverhalt ist in Fig. 3 der Zeichnung dargestellt.

Zur Leistungsregelung über die Kraftstoffzufuhr ist ausgehend von einer bestimmten Stellung des Schubhebels, und zwar in Abhängigkeit von dem durch Flughöhe, Flugmachzahl und Außentemperatur definierten Flugzustand, wie beispielsweise in der US 5315819 beschrieben, für jede Triebwerksleistungsstufe jeweils ein Funktionsgenerator vorgesehen. Die Funktionsgeneratoren werden mit Eingangssignalen für die Flughöhe, die Machzahl und die Außentemperatur versorgt. Als Antwort auf das jeweils eingegebene Signal werden entsprechende Ausgangssignale geliefert, wobei sich die ausgegebenen Signale ändern, wenn sich der Flugzustand ändert. Jeder Funktionsgenerator umfasst eine dreidimensionale Tabelle (Datenkubus), dessen Funktionsbereich durch die Flugmachzahl (MN), durch die Außentemperatur in Form der Differenz von der ISA-Temperatur (DTAMB) und die Flughöhe (ALT) in Form eines dieser zugeordneten Druckes definiert ist. Die dreidimensionale Tabelle zeigt eine auf den eingegebenen Signalen von Machzahl, Flughöhe und Außentemperatur beruhende Zielleistung an, wobei jeder Funktionsgenerator, falls die eingegebenen Signale zwischen die durch die Tabelle eindeutig definierten Werte (Stützstellen) fallen, eine Dreifachinterpolation durchführt, um die dementsprechende Zielleistung (Zieldrehmoment) abzuleiten. Beispielsweise erfolgt die Datenablage in dem der entsprechenden Triebwerksleistungsstufe zugeordneten Datenkubus in der Art, dass für verschiedene Flughöhen Tabellen erstellt werden, die die Machzahl über der Außentemperatur abbilden. Voraussetzung ist jedoch, dass alle Höhentabellen aus programmiertechnischen Gründen genau die gleichen Stützstellen (diskrete Werte) aufweisen, zwischen denen interpoliert werden muss, wenn die eingegebenen Signale der Außentemperatur, der Machzahl und der Flughöhe nicht den Stützstellen entsprechen, um Zwischenwerte der Leistung zu ermitteln. Diese vorgeschriebenen Interpolationsregeln sind robuste, zuverlässige Rechenroutinen, die eine gewisse Sicherheit gewährleisten.

Mit dem zuvor erläuterten Regelsystem ist der Schubverlauf - unter der Voraussetzung, dass der maximale Schub auf der Grundlage nur eines einzigen Leistungsbegrenzers, hier der Turbinengastemperatur, in Bezug auf die Außentemperatur bei konstanter Machzahl und Flughöhe ermittelt wird - durch minimal drei Stützstellen, und zwar den kältesten Tag, den Kink Point und den heißesten Tag, eindeutig definiert. Unter der Annahme einer gleichmäßigen Stützstellenverteilung über Machzahl und Flughöhe kann daher die Anzahl der Stützstellen gering gehalten werden. Da für jede Triebwerksleistungsstufe und einen Leistungsbegrenzer genau ein Kink Point für alle Flughöhen definiert ist, bewegt sich die Anzahl der in einem Datenkubus gespeicherten Datenpunkte in engen, hinsichtlich des Speicheraufwandes und der Speicherkapazität beherrschbaren Grenzen. Wenn jedoch unter dem Aspekt der Erzielung einer maximalen Triebwerksleistung bei jedem Flugzustand mehrere leistungslimitierende Parameter herangezogen werden und folglich der Kink Point nicht fest definiert ist, ist auf der Basis zugelassener Rechenroutinen in Verbindung mit der geforderten Gleichheit der Stützstellen eine um ein Vielfaches erhöhte Anzahl von im Datenkubus gespeicherten Stützstellen zur exakten Definition des Kink Points erforderlich, damit das Triebwerk die thermodynamischen und mechanischen Belastungsgrenzen nicht überschreitet und die gewünschte hohe Leistung zur Verfügung stellen kann. Die hohe Datenmenge erfordert jedoch eine um ein Vielfaches erhöhte, sehr kostenaufwendige Speicherkapazität. Zum anderen ist der Rechenaufwand deutlich erhöht und so zeitaufwendig, dass ein sicherer Flugbetrieb nicht gewährleistet ist. Der Arbeitsaufwand zur Erstellung der für jede Triebwerksleistungsstufe erforderlichen Datenkuben - der auch bei Änderung eines der limitierenden Parameter jedes Mal notwendig ist - ist hoch.

Der Erfindung liegt die Aufgabe zugrunde, ein Regelsystem zur Erzielung einer maximalen Triebwerksleistung auf der Basis einer Mehrzahl leistungsbegrenzender Triebwerksparameter anzugeben, das bei reduzierter Datenmenge eine geringe Speicherkapazität und unter dem Sicherheitsaspekt einen zeitlich geringen Rechenaufwand erfordert.

Erfindungsgemäß wird die Aufgabe mit einem gemäß den Merkmalen des Patentanspruchs 1 ausgeführten Regelsystem gelöst. Aus den Unteransprüchen ergeben sich weitere Merkmale und vorteilhafte Weiterbildungen der Erfindung.

Zur Einstellung einer maximal möglichen Triebwerksleistung mit einem elektronischen Regelsystem werden auf der Grundlage einer Mehrzahl leistungsbegrenzender Parameter für jeden einzelnen dieser Leistungsbegrenzer dreidimensionale Datensätze (Datenkuben) auf der Basis der Flughöhe, der Außentemperatur und der Flugmachzahl erstellt und in dem Regelsystem gespeichert. Von den aufgrund der Eingangssignale entsprechend dem Flugzustand in der jeweiligen Triebwerksleistungsstufe für jeden Triebwerksparameter gemäß den Datenkuben errechneten maximalen Leistungen wird in einem Vergleicher der niedrigste Wert ermittelt, auf dessen Grundlage die Brennstoffzufuhr zum Triebwerk geregelt wird. Durch das getrennte Speichern der Daten und das separate Berechnen der maximal möglichen Triebwerksleistung auf der Grundlage jeweils eines Leistungsbegrenzers können die Speicherkapazität und der Zeitaufwand zur Ermittlung der maximal möglichen Leistung sowie der Aufwand zur Erstellung neuer oder aufgrund nachträglich geänderter Triebwerksparameter überarbeiteter Datensätze erheblich reduziert werden. Daraus folgen eine deutliche Kosteneinsparung und eine erhöhte Sicherheit.

Eine weitere Verminderung des Arbeits-, Speicher- und Berechnungsaufwandes ergibt sich zudem dadurch, dass in weiterer Ausbildung der Erfindung bei gleichen Randbedingungen in verschiedenen Triebwerksleistungsstufen einund derselbe Datensatz für einen Wellendrehzahl- und/oder Verdichterdruckverhältnis-Grenzwert gemeinsam benutzt werden kann. Das kann auch für beliebige andere limitierende Parameter der Fall sein und hängt vom jeweiligen Anwendungsfall ab.

Zur maximalen Leistungsnutzung sind gemäß einem weiteren Merkmal der Erfindung in dem Regelsystem in jeder Leistungsstufe und für jeden leistungsbegrenzenden thermodynamischen und/oder mechanischen Leistungsbegrenzer des Weiteren zweite dreidimensionale Datensätze (Datenkuben) gespeichert, die eine Leistungsminderung der mit dem jeweiligen ersten Datenkubus (dreidimensionalen Datensatz) ermittelten maximalen Leistung infolge Luftentnahme für Kabinen- und Enteisungsluft unmittelbar berücksichtigen. Das heißt, nur wenn Luftentnahme tatsächlich zur Überschreitung eines maximalen limitierenden und für den Flugzustand relevanten Limiters führt, wird die entsprechende Leistung reduziert. Solange bei der von der Regelung berechneten Flugleistung kein Limiter tangiert wird, kann bei Luftentnahme trotzdem die volle garantierte Leistung des Triebwerks zur Verfügung gestellt werden.

In weiterer Ausbildung der Erfindung ist in dem Regelsystem für jede Triebwerksleistungsstufe ein konstanter Maximalwert der Leistung gespeichert, der die maximal garantierte Triebwerksleistung je Flugzustand abbildet.

Ein Ausführungsbeispiel der Erfindung wird anhand der Zeichnung näher erläutert. Es zeigen:
- Fig. 1: eine schematische Darstellung eines in der EEC hinterlegten Datenkubus (dreidimensionale Datentabelle);
- Fig. 2: ein erfindungsgemäß ausgebildetes Regelungssystem zur Gewährleistung einer maximalen Triebwerksleistung; und
- Fig. 3: eine Prinzipdarstellung des Schubverlaufes über der Aussentemperatur unter Berücksichtigung der Turbinengastemperatur als limitierender Parameter

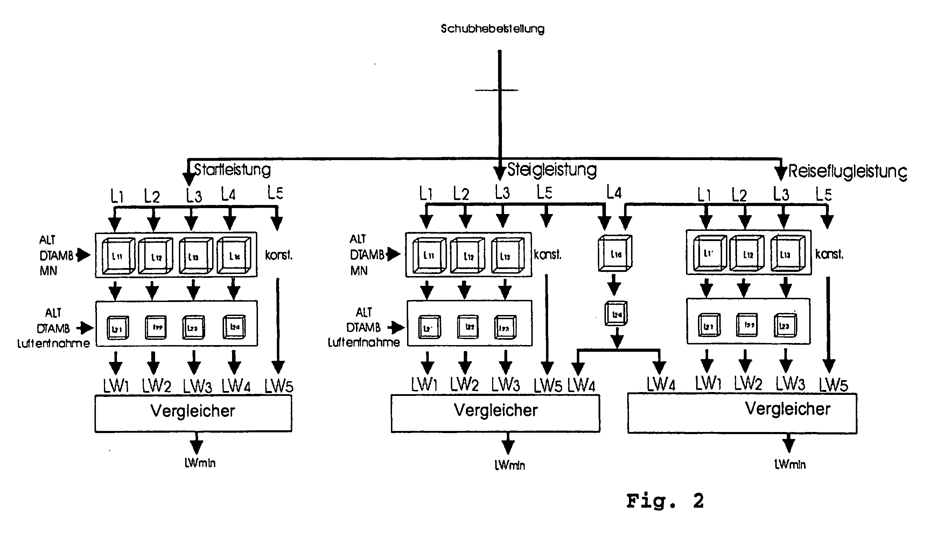

Die Leistungsregelung erfolgt nach Fig. 2 in der verschiedenen Triebwerksleistungsstufen - Startleistung, Steigleistung und Reiseflugleistung - ausgehend von der vom Pilot vorgenommenen Schubhebeleinstellung. In dem in Fig. 1 dargestellten Datenkubus ist für eine bestimmte Triebwerksleistungsstufe (Rating) ein Datensatz oder Datenkubus für unterschiedliche
- Flughöhen (ALT), die jeweils einem bestimmten Druck zugeordnet sind,
- Außentemperaturen als Differenz von der ISA-Temperatur (DTAMB), und
- Flugmachzahlen (MN)
dargestellt. Derartige dreidimensionale Datentabellen, nämlich erste Datenkuben L11 bis L14, sind in der vorliegenden Ausführungsform, wie Fig. 2 zeigt, für vier in einer bestimmten Höhe vorgegebene leistungsbegrenzende Parameter (Limiter L1 bis L4), hier
- eine maximale Turbinengastemperatur (L1)
- eine maximale Hochdruckwellendrehzahl (L2)
- ein maximales Hochdruckverdichter-Druckverhältnis (L3) und
- eine maximale Mitteldruckwellendrehzahl (L4),
die nicht überschritten werden dürfen, in dem Speicher der elektronischen Triebwerksregelung (EEC - electronic engine control) hinterlegt, und zwar jeweils für gemäß dem vorliegenden Ausführungsbeispiel drei verschiedene Triebwerksleistungsstufen, hier die Startleistung (take off), die Steigleistung (climb), und die Leistung im Reiseflug (cruise). Als weitere Triebwerksleistungsstufe kann die maximale Leistung bei Ausfall eines Triebwerks berücksichtigt werden. Die Startleistung ist am größten und die Reiseflugleistung ist am niedrigsten, während die Steigleistung einen dazwischen liegenden Wert aufweist. Durch das Aufteilen der ersten Datenkuben L11 bis L14 auf die jeweiligen leistungsbegrenzenden Parameter (L1 bis L4) ist es unter den aus Sicherheitsgründen vorgegebenen Rechenroutinen zur Ermittlung der maximalen Leistung aufgrund der auf den Flugzustand bezogenen Eingangssignale gegenüber einem für alle Leistungsbegrenzer (L1 - L4) gemeinsamen Datenkubus möglich, aufgrund der durch stetige, lineare Verläufe in jedem einzelnen Datenkubus reduzierten Stützstellenanzahl die erforderliche Datenmenge und den dementsprechenden Rechenaufwand in erheblichem Maße zu verringern und unter dem Aspekt einer hohen Sicherheit die Rechengeschwindigkeit dementsprechend zu erhöhen. Die Verringerung der Datenmenge ist umso größer, je mehr leistungsbegrenzende Parameter verwendet werden. Bei den im Ausführungsbeispiel benutzten vier Leistungsbegrenzern können mit dem "Aufsplitten" auf jeweils einen Datenkubus ca. 90% der sonst erforderlichen Daten eingespart werden. Datenkuben für weitere leistungsbegrenzende Parameter können mit geringem Aufwand erstellt und in das Regelsystem eingebunden werden. Gleichermaßen ist der Aufwand für die Neuerstellung eines Datenkubus aufgrund eines zwischenzeitlich geänderten leistungsbegrenzenden Parameters weitaus geringer als wenn aufgrund einer solchen Änderung ein neuer, alle Leistungsbegrenzer umfassender Datenkubus aufgestellt werden müsste.

Den in den drei genannten Triebwerksleistungsstufen für die verschiedenen leistungsbegrenzenden Parameter erstellten einzelnen (ersten) Datenkuben L11, L12, L13 und L14 sind - jeweils in der gleichen Triebwerksleistungsstufe und jeweils für den gleichen leistungsbegrenzenden Triebwerksparameter (Limiter L1 bis L4) - jeweils ein weiterer (zweiter) Datenkubus L21, L22, L23 und L24, nämlich ein Luftentnahme-Datenkubus, unmittelbar nachgeschaltet, der in dem Regelungssystem eine die Temperatur und die Drehzahl erhöhende Luftentnahme am Hochdruckverdichter zur Bereitstellung von Kabinenluft, durch Leistungsreduzierung (bleed debit) berücksichtigt. Der Zubehör-Datenkubus L21 bis L24 umfasst in der Ausführungsform gemäß Fig. 2 auf die Flughöhe (ALT), die Außentemperatur (DTAMB) und die Luftentnahme bezogenen Daten. Mit der unmittelbaren Zuordnung der Zubehör-Datenkuben L21 bis L24 zu den jeweiligen ersten Datenkuben L11 bis L14 ist es möglich, eine Leistungsreduktion des Triebwerks nicht pauschal vorzunehmen, sondern nur dann, wenn bei einer Luftentnahme für Flugzeugzubehör tatsächlich auch der kritische Wert des jeweiligen leistungsbegrenzenden Parameters erreicht bzw. überschritten wird. Auch diese Regelungsmaßnahme trägt dazu bei, die höchste mögliche Triebwerksleistung zu erzielen.

Aus Fig. 2 ist ersichtlich, dass in jeder Triebwerksleistungsstufe ein Maximalleistungsbegrenzer L5 gespeichert ist, der unabhängig vom Flugzustand konstant ist und eine garantierte Maximalleistung darstellt. Für die Leistungsstufen "Reiseflugleistung" und "Steigleistung" zeigt Fig. 2 zudem, dass es mit dem vorliegenden Regelsystem auch möglich ist, denselben ersten und zweiten Datenkubus, hier beispielhaft L14 und L24, für zwei oder mehrere Triebwerksleistungsstufen zu verwenden. Im vorliegenden Ausführungsbeispiel betrifft das die maximale Mitteldruckwellendrehzahl (L4), die für die betreffenden Triebswerksleistungsstufen gleich ist. Es könnte jedoch gleichermaßen die limitierenden Parameter "Hochdruckdrehzahl" oder "Verdichterdruckverhältnis" sowie andere Parameter betreffen. Dadurch werden sowohl die erforderliche Speicherkapazität als auch der zur Erstellung der Datenkuben notwendige Aufwand weiter gesenkt.

Mit der Einstellung des Schubhebels als Eingabeparameter wird in der jeweiligen Triebwerkleistungsstufe mit den ersten und zweiten Datenkuben entsprechend dem Flugzustand (Flughöhe, Außentemperatur, Flugmachzahl) für jeden leistungsbegrenzenden Parameter ein entsprechender (maximal möglicher) Leistungswert LW1 bis LW4, der gegebenenfalls durch die Leistungsentnahme für Luftentnahme korrigiert ist, herausgelesen. Diese Leistungswerte LW1 bis LW4 werden zusammen mit dem vom Maximalleistungsbegrenzer L5 vorgegebenen Leistungswert LW5 in einen Vergleicher V eingegeben, der den kleinsten (kritischsten) Leistungswert als endgültige Leistungsausgabe des Regelsystems auswählt, um mit diesem Wert über die Regelung der Kraftstoffzufuhr die maximal mögliche Leistung des Triebwerks einzustellen.

## Patentansprüche

1. Elektronisches Triebswerksregelungssystem zur Einstellung einer maximal möglichen Triebwerksleistung auf der Grundlage von in einem als dreidimensionale Tabelle ausgebildeten Datenkubus jeweils für verschiedene Triebwerksleistungsstufen gespeicherten Flugzustandsdaten und einer Mehrzahl leistungsbegrenzender thermodynamischer und mechanischer Triebwerksparameter, **dadurch gekennzeichnet, dass** für jeden leistungsbegrenzenden Triebwerksparameter (L1 bis L4) ein eigenständiger Datenkubus (L11 bis L14) zur Berechnung der jeweils maximalen Leistung (LW1 bis LW4) gespeichert ist und den Datenkuben ein Vergleicher (V) zur Ermittlung des jeweils kleinsten Leistungswertes (LWₘᵢₙ) als Regelwert für die elektronische Regelung der Brennstoffzufuhr während des Betriebs des Triebwerks nachgeschaltet ist.

2. Regelsystem nach Anspruch 1, **dadurch gekennzeichnet, dass** jedem für einen leistungsbegrenzenden Parameter (L1 bis L4) vorgesehen ersten Datenkubus (L11 bis L14), ein zweiter Datenkubus (L21 bis L24), der eine zusätzliche, zur Überschreitung eines leistungsbegrenzenden Parameters führende Luftentnahme für das Flugzeug leistungsbegrenzend berücksichtigt, zugeordnet ist, wobei die um die tatsächliche Leistungsentnahme reduzierte Leistung (LW_{min,red}) als Regelwert in den Vergleicher (V) eingeht.

3. Regelsystem nach Anspruch 2, **dadurch gekennzeichnet, dass** der jeweils erste Datenkubus (L11 bis L14) auf der Flughöhe (ALT), der Außentemperatur (DTAMB) und der Flugmachzahl (MN) und der jeweils zweite Datenkubus (L21 bis L24) auf der Flughöhe, der Außentemperatur und der Luftentnahme für die Flugzeugkabinenluft basiert.

4. Regelsystem nach einem der Ansprüche 1 bis 3, **dadurch gekennzeichnet, dass** in jeder Triebwerksleistungsstufe als leistungsbegrenzende Parameter (L1 bis L4) die Turbinengastemperatur, die Hochdruckwellendrehzahl, die Mitteldruckwellendrehzahl und das Hochdruckverdichter-Druckverhältnis sowie zusätzlich eine unmittelbar in den Vergleicher eingespeiste konstante Maximalleistung (L5) vorgesehen sind.

5. Regelsystem nach Anspruch 4, **dadurch gekennzeichnet, dass** bei übereinstimmenden Randbedingungen hinsichtlich der Mitteldruckdrehzahl, der Hochdruckwellendrehzahl und/oder des Hochdruckverdichter-Druckver-hältnisses die entsprechenden Datenkuben (L14, L24) nur einmal gespeichert und in verschiedenen Triebwerksleistungsstufen gemeinsam nutzbar sind.

## Claims

1. Electronic engine control system for setting a max. possible power on the basis of the flight condition data stored in a data cube designed as a three-dimensional table for various engine ratings and a variety of power-limiting thermodynamic and mechanical engine parameters, **characterized in that** a unique data cube (L11 to L14) for each power-limiting engine parameter (L1 to L4) is stored for calculating the respective maximum power (LW1 to LW4) and a comparator (V) is provided downstream of the data cubes for determining the respective smallest power value (LWₘᵢₙ) as control value for the electronic control of the fuel supply during the operation of the engine.

2. Control system in accordance with Claim 1, **characterized in that** a second data cube (L21 to L24), which, by power limitation, accounts for an additional aircraft air bleed leading to a transgression of a power-limiting parameter, is allocated to each first data cube (L11 to L14) provided for a power-limiting parameter (L1 to L4), with the power reduced by the actual power offtake (LW_{min,red}) being entered into the comparator (V) as control value.

3. Control system in accordance with Claim 2, **characterized in that** the respective first data cube (L11 to L14) is based on the flight altitude (ALT), the ambient temperature (DTAMB) and the flight Mach number (MN), and the respective second data cube (L21 to L24) on the flight altitude, the ambient temperature and aircraft cabin air bleed.

4. Control system in accordance with one of the Claims 1 to 3, **characterized in that** the turbine gas temperature, the high-pressure shaft speed, the intermediate-pressure shaft speed and the high-pressure compressor pressure ratio and, additionally, a constant maximum power (L5) fed immediately into the comparator are provided as power-limiting parameters (L1 to L4) at each engine rating.

5. Control system in accordance with Claim 4, **characterized in that**, under conforming boundary conditions regarding intermediate-pressure shaft speed, high-pressure shaft speed and/or high-pressure compressor pressure ratio, the respective data cubes (L14, L24) are stored only once and are utilizable jointly at various engine ratings.

## Revendications

1. Système électronique de régulation de moteur destiné à établir une puissance maximale possible sur la base de données d'état de vol respectivement enregistrées dans un cube de données sous forme d'un tableau tridimensionnel pour différents étages de puissance de moteur thermodynamiques et mécaniques limitant la puissance, **caractérisé en ce qu'**un cube de données indépendant (L11 à L14) est stocké pour chaque paramètre de moteur limitant la puissance (L1 à L4) pour calculer la puissance maximale respective (LW1 à LW4) et qu'un comparateur (V) pour déterminer la valeur de puissance minimale respective (LWₘᵢₙᵢ) est disposé en aval des cubes de données, en tant que valeur de régulation pour la régulation électronique de l'alimentation en carburant lors du fonctionnement du moteur.

2. Système de régulation selon la revendication n° 1, **caractérisé en ce qu'**un second cube de données (L21 à L24) est affecté à chacun des premiers cubes de données (L11 à L14) prévus pour les paramètres limitant la puissance (L1 à L4), qui prend en compte - en réduisant la puissance - un prélèvement d'air supplémentaire, qui provoque un dépassement d'un paramètre limitant la puissance, sachant que la puissance réduite (LW_{mini, red}) par le prélèvement de puissance effectif est entrée dans le comparateur (V) en tant que valeur de régulation.

3. Système de régulation selon la revendication n° 2, **caractérisé en ce que** chaque premier cube de données (L11 à L14) est basé sur la hauteur de vol (ALT), la température extérieure (DTAMB) et le nombre de Mach en vol (MN) et que chaque second cube de données (L21 à L24) est basé sur la hauteur de vol, la température extérieure et le prélèvement d'air pour l'air de la cabine de l'avion.

4. Système de régulation selon une des revendications n° 1 à 3, **caractérisé en ce que** dans chaque étage de puissance du moteur sont prévus en tant que paramètres limitant la puissance (L1 à L4) la température gaz turbine, la vitesse de rotation de l'arbre haute pression, la vitesse de rotation de l'arbre moyenne pression, le taux de compression du compresseur haute pression et de plus une puissance maximale constante (L5) entrée directement dans le comparateur.

5. Système de régulation selon la revendication n° 4, **caractérisé en ce qu'**avec des conditions limites en adéquation avec la vitesse de rotation de l'arbre moyenne pression, la vitesse de rotation de l'arbre haute pression et/ou le taux de compression du compresseur haute pression, les cubes de données correspondants (L14, L24) sont stockés seulement une fois et peuvent être utilisés en commun dans différents étages de puissance de moteur.
